# EUROPÄISCHE PATENTSCHRIFT

(11) **EP 2 769 370 B1**
(45) Veröffentlichungstag und Bekanntmachung des Hinweises auf die Patenterteilung: **20.09.2017**
(21) Anmeldenummer: 12779019.4
(22) Anmeldetag: 18.10.2012
(51) Int. Cl.: G08C 17/02, G08C 23/04, A47C 31/00

(54) **ELEKTROMOTORISCHER MÖBELANTRIEB UND VERFAHREN ZUM STEUERN EINES ELEKTROMOTORISCHEN MÖBELANTRIEBS**
ELECTROMOTIVE FURNITURE DRIVE AND METHOD FOR CONTROLLING AN ELECTROMOTIVE FURNITURE DRIVE
ENTRAÎNEMENT DE MEUBLE À MOTEUR ÉLECTRIQUE ET PROCÉDÉ POUR COMMANDER UN ENTRAÎNEMENT DE MEUBLE À MOTEUR ÉLECTRIQUE

(30) Priorität: 18.10.2011 DE 202011051662 U
(43) Veröffentlichungstag der Anmeldung: 27.08.2014
(73) Patentinhaber: Dewertokin GmbH, 32278 Kirchlengern (DE)
(72) Erfinder: HILLE, Armin, 33659 Bielefeld (DE)
(74) Vertreter: Dantz, Jan Henning
(86) Internationale Anmeldenummer: PCT/EP2012/070667
(87) Internationale Veröffentlichungsnummer: WO 2013/057198

(56) Entgegenhaltungen:
- US-A1- 2003 095 211
- US-A1- 2003 195 644
- US-A1- 2007 253 149

## Beschreibung

Die Erfindung betrifft einen elektromotorischen Möbelantrieb mit einer Steuervorrichtung, einer Energieversorgungseinrichtung, einer Handbedienung und mit einer Anschlusskonfiguration mit mindestens einem elektromotorischen Verbraucher. Die Erfindung betrifft weiterhin ein Verfahren zum Steuern eines elektromotorischen Möbelantriebs.

Derartige elektromotorische Möbelantriebe sind in unterschiedlichen Ausführungsformen bekannt. Sie sind als Linearantriebe mit einem linear verstellbaren Abtriebsglied oder als Rotationsantriebe mit einem rotierenden Abtriebsglied ausgebildet und haben sich in der Praxis bestens bewährt. Die Linearantriebe weisen einen oder eine Anzahl Elektromotore auf, wobei jedem Motor ein Drehzahlreduziergetriebe und einem weiteren dem Drehzahlreduziergetriebe nachgeschaltetem Getriebe beispielsweise in Form eines Gewindespindelgetriebes nachgeschaltet ist, welches aus der Drehbewegung des Motors eine Linearbewegung des Abtriebsgliedes erzeugt. Die Rotationsantriebe weisen wenigstens ein dem jeweiligen Elektromotor nachgeschaltetes Drehzahlreduziergetriebe auf, wobei das letzte Getriebeglied das Abtriebsglied bildet. Das Abtriebsglied des jeweiligen elektromotorischen Möbelantriebs steht mit einem festen und/oder mit einem beweglichen Möbelbauteil in Verbindung, so dass bei einem Betrieb des Elektromotors die beweglichen Möbelbauteile relativ zueinander verstellt werden. Dabei kann das Möbel als Lattenrost, Arbeitstisch, Bett, Liegefläche, Behandlungsliege, Krankenhaus- bzw. Pflegebett, sowie auch als eine Hubeinrichtung für Personen wie Lifter oder Patientenlifter ausgebildet sein.

Es ist üblich, derartige elektromotorische Möbelantriebe mit einer so genannten Netzfreischaltung zu versehen, welche diese bei Nichtgebrauch mehr oder weniger vom elektrischen Versorgungsnetz trennt. Zum Betrieb einer solchen Netzfreischaltung ist eine so genannte Hilfsspannungsquelle erforderlich, welche zum Umschalten oder wenigstens Einleiten einer Umschaltung aus einem ausgeschalteten Ruhezustand in einen eingeschalteten Betriebszustand zum Auslösen der Schaltsignale eine elektrische Energie bereitstellt.

Weitere Verbraucher, die an eine Steuerungsvorrichtung des elektromotorischen Möbelantriebs anschließbar sind, sind u.a. Massageantriebe, Heizungen, Leuchten uva. Die Handbedienung kann über eine drahtgebundene oder drahtlose (Funk/Infrarot) bidirektionale Übertragungsstrecke ausgebildet sein. Dabei bedeutet bidirektional, dass die Handbedienung nicht nur Steuersignale an die Steuerungsvorrichtung leiten kann, sondern auch seitens der Steuervorrichtung z.B. Signale empfangen kann.

Es sind Handbedienungen mit einem vollgrafischen Display (Anzeigeeinrichtung) und mit eingebrannten (hardwaretechnischen) Bildern bekannt. Das vollgrafische Display zeigt verschiedene Bilder und Funktionen der Verbraucher an. Da aus Platzgründen in dem Display nicht alle Funktionen abgebildet werden können, können die Bilder umgeschaltet werden. So gibt es ein Bild für einen Verstellantrieb, ein anderes Bild für die Massageantriebe, ein noch weiteres für die Heizung usw. Dies Umschalten wird auch Umblättern genannt und kann z.B. durch Tastenbetätigung erfolgen. Mittels anderer Tasten wird die Funktion des jeweiligen Verbrauchers anhand des angezeigten Bildes gesteuert.

Derartige elektromotorische Möbelantriebe mit Handbedienungen der eingangs beschriebenen Art haben sich in der Praxis bestens bewährt. Als nachteilig ist jedoch die fehlende Flexibilität und Anpassungsfähigkeit zu bewerten, was die Bilddarstellung und die Symboldarstellung eines Displays der Handbedienung betrifft. In der Praxis kommen zahlreiche Konfigurationen eines Möbelantriebs für kleinere bis mittelgroße Herstellungsserien eines Möbels zum Einsatz, wobei eine unterschiedliche Anzahl von Verbrauchern, beispielsweise eine unterschiedliche Anzahl von Verstellantrieben und/oder Massagemotore und/oder Heizungen und/oder Beleuchtungen, etc., auch bei einer Kleinserie eines Möbels zum Einsatz kommen. Somit müßte für jede Serie eines Möbels eine entsprechende Anpassung der Handbedienung beziehungsweise eine entsprechende Konfiguration der Handbedienung entsprechend der angeschlossenen Verbraucher stattfinden, sowie auch deren Darstellungsfähigkeit in Form der Bilder und Symbole, welche manuell programmiert oder hardwaretechnisch an das jeweilige Möbel mit dem jeweiligen elektromotorischen Möbelantrieb angepasst werden muss. Dies führt zu einer hohen Variantenvielfalt der Handbedienung, was logistisch sehr ungünstig und bezogen auf die individuelle Herstellung und Montierbarkeit jeder Handbedienung sehr aufwendig ist.

Die US 2007/253149 A1 beschreibt ein elektronisches System für Möbel mit mindestens einem Zusatzmodul. Ein Handbedienungsmodul nimmt eine Vielzahl von Frontplatten aufnehmen und wird damit betrieben. Jede Frontplatte umfasst mindestens ein Schnittstellengerät, welches das mindestens eine Zusatzmodul steuert. Das Handbedienungsmodul gibt ein Steuersignal aus, welches zum Teil auf einer Frontplatte basiert, je nachdem, welche Frontplatte aus der Vielzahl von Frontplatten mit dem Handbedienungsmodul verbunden ist. Ein Steuermodul ist mit einer Vielzahl von Zusatzmodulen verbindbar, empfängt das Steuersignal und gibt ein Zusatzmodulsteuersignal an das Zusatzmodul aus. Das Zusatzmodulsteuersignal basiert auf dem Steuersignal und auf dem Zusatzmodul, welches aus der Vielzahl von Zusatzmodulen mit dem Steuermodul verbunden ist.

In der US 2003/095211 A1 betrifft eine nachträglich bzw. im Feld erweiterbare universelle Fernbedienung, die von einem ersten gesteuerten Gerät Daten erhält. Die Fernbedienung empfängt von dem ersten gesteuerten Gerät Benutzerschnittstellenanzeigen zur Steuerung des ersten gesteuerten Gerätes selbst. Die Fernbedienung kann auch die Benutzerschnittstellenanzeigen zur Steuerung eines zusätzlichen gesteuerten Gerätes von dem ersten gesteuerten Gerät empfangen. Das erste gesteuerte Gerät kann in einer Ausführung diese Benutzerschnittstellenanzeigen in Reaktion auf Spezifikationen, die es von der elektronischen Anzeige des zusätzlichen gesteuerten Gerätes empfängt. Ein Benutzer steuert die gesteuerten Geräte unter Verwendung der Benutzerschnittstellen, welche der Fernbedienung zur Verfügung gestellt sind. Als Reaktion darauf werden Steuerbefehle an das erste gesteuerte Gerät gesandt, wobei ein Befehl/Befehle für das zusätzliche/die zusätzlichen Gerät/Geräte eingeschlossen sind. Das erste gesteuerte Gerät leitet die Befehl an das zusätzliche/die zusätzlichen Gerät/Geräte weiter. Es ist auch alternativ möglich, dass die Befehle für die zusätzlichen Geräte direkt an die zusätzlichen Geräte gesendet werden.

Die US 2003/195644 A1 beschreibt eine Steuerung einer medizinischen Ausrüstung. Eine tragbares Steuergerät für eine medizinische Ausrüstung weist ein Benutzereingabegerät auf. Ein Prozessor ist dazu konfiguriert, zu bestimmen, ob ein vorher festgelegter Abstand von einer Basiseinheit überschritten wird, und einen Alarm zu signalisieren, wenn der vorher festgelegte Abstand von der Basiseinheit überschritten ist. Ein Steuergerät für medizinische Geräte ist in eine Umgebung eines Operationsraums integriert, welcher einen Operationstisch, ein chirurgisches Beleuchtungssystem und einen IV-Stand umfasst. Die Ausrüstung des Operationsraums wird von einer Steuerstation aus gesteuert und überwacht. Das Steuergerät stellt eine einzelne, integrierte und benutzerfreundliche Schnittstelle für eine Pflegeperson zur Steuerung von medizinischen Geräten, wie Operationstisch und Beleuchtungssystem bereit.

Der Erfindung liegt daher die Aufgabe zugrunde, einen verbesserten elektromotorischen Möbelantrieb und ein verbessertes Verfahren zum Steuern des elektromotorischen Möbelantriebs zu schaffen.

Die Aufgabe wird durch einen elektromotorischen Möbelantrieb mit den Merkmalen des Anspruchs 1 gelöst.

Die Aufgabe wird zudem durch ein Verfahren mit den Merkmalen des Anspruchs 12 gelöst.

Der elektromotorische Möbelantrieb weist eine Handbedienung mit einer Ermittlungseinrichtung auf, welche zur Ermittlung der Anschlusskonfiguration ausgebildet ist.

Der elektromotorische Möbelantrieb weist ferner eine Steuervorrichtung auf.

Unter dem Begriff Anschlusskonfiguration ist zu verstehen, welche Art von Verbraucher (Verstellmotor, Heizung, Massageantrieb usw.) an welchem Anschluss einer Steuervorrichtung des elektromotorischen Möbelantriebs angeschlossen ist.

Unter dem Begriff Anschlusskonfiguration ist in einer alternativen Ausführungsform weiterhin zu verstehen, welche Art von Verbraucher (Verstellmotor, Heizung, Massageantrieb usw.) an dem dafür vorbestimmten Anschluss einer Steuervorrichtung des elektromotorischen Möbelantriebs angeschlossen ist.

Eine anmeldungsgemäße Handbedienung weist zumindest eine Anzeigeeinrichtung zur Anzeige von gespeicherten Bildern und Bedienelemente auf, wobei letztere als berührungsempfindliche Bedienelemente in der Anzeige integriert sein können, die dann üblicherweise als Touch-Screen bezeichnet wird. Die Handbedienung kann speziell zur Bedienung des elektromotorischen Möbelantriebs ausgelegt sein. Im Sinne der Anmeldung stellt jedoch ein Mobiltelefon, insbesondere ein sogenanntes Smartphone, oder dergleichen auch eine Handbedienung dar, falls dieses Gerät ein Programm aufweist, welches mit dem elektromotorischen Möbelantrieb kommunikativ in Verbindung tritt, um Daten, Steuerbefehle, Regelbefehle oder Zustandsinformationen auszutauschen.

Bei dem erfindungsgemäßen Möbelantrieb kann eine Anpassung der Handbedienung, insbesondere die Anpassung der Bedienung der Handbedienung, an die Anschlusskonfiguration des jeweiligen elektromotorischen Möbelantriebs vorgenommen werden. Damit wird es ermöglicht, dass in einer Handbedienung sämtliche möglichen Bilder von Anschlusskonfigurationen abgespeichert sind und nur eine Handbedienung für alle möglichen Kombinationen von Verbrauchern, die an den elektromotorischen Möbelantrieb angeschlossen werden können, benötigt wird. In erfindungsgemäßer Weise ist dadurch eine Handbedienung für eine Vielzahl Varianten eines elektromotorischen Möbelantriebs geschaffen, welche einheitlich ausgebildet und somit leicht montierbar herzustellen ist.

Demgemäß ist ein elektromotorischer Möbelantrieb mit einer Steuervorrichtung, einer Energieversorgungseinrichtung, einer Handbedienung, die über eine bidirektionale Übertragungsstrecke mit der Steuervorrichtung gekoppelt ist, und mit einer Anschlusskonfiguration mit mindestens einem elektromotorischen Verbraucher, wobei die Handbedienung mindestens eine Anzeigeeinrichtung zur Anzeige von gespeicherten Bildern zur Bedienung aufweist, bereitgestellt. Der elektromotorische Möbelantrieb ist dadurch gekennzeichnet, dass die Handbedienung eine Ermittlungseinrichtung aufweist, welche zur Ermittlung der Anschlusskonfiguration ausgebildet ist.

Ein Kunde verfügt über eine Mehrzahl von Produktkonfigurationen, jedoch nur in geringen Stückzahlen. Manche Produkte, d.h. elektromotorische Möbelantriebe, sind mit Heizungen ausgerüstet, andere wiederum nur mit Massageeinheiten und wieder andere mit Verstellantrieben, Heizung und Massageantrieben. Je nachdem wie das Möbel aufgebaut ist, passt sich die Anzeigeeinrichtung der Handbedienung an die Anschlusskonfiguration auf einfache Weise an. Die Ermittlungseinrichtung stellt fest, welche Art von Verbraucher der elektromotorische Möbelantrieb aufweist. Ist z.B. eine Massageeinheit angeschlossen, muss die Anzeigeeinrichtung auch das Bild für diese Massageeinheit anzeigen, bzw. zur Anzeige bringen können.

In einer Ausführung ist die Ermittlungseinrichtung bei einer Neuinbetriebnahme, nach Wartung, Austausch oder Nachrüstung des elektromotorischen Möbelantriebs manuell oder/und automatisch aktivierbar. Die Ermittlungseinrichtung leitet und führt die Ermittlung der Anschlusskonfiguration von der Handbedienung aus durch und passt diese selbständig an die jeweilige Anschlusskonfiguration an.

In einer Ausführung ist vorgesehen, dass die Ermittlungseinrichtung zur Erzeugung und Anzeige einer Menüführung zur manuellen Ermittlung der Anschlusskonfiguration durch einen Benutzer auf der Anzeigeinrichtung ausgebildet ist. Dabei kann der Benutzer anhand des Aufbaus des elektromotorischen Möbelantriebs die Anschlusskonfiguration direkt eingeben.

Alternativ kann die Ermittlungseinrichtung zum Auslesen von in der Steuervorrichtung gespeicherten Daten zur Ermittlung der Anschlusskonfiguration ausgebildet sein.

In einer weiteren Ausführung kann die Ermittlungseinrichtung für eine automatische Ansteuerung aller angeschlossenen Verbraucher ausgebildet sein. Dabei benötigt sie nur einen Startimpuls, der automatisch oder vom Benutzer durch eine Tastenkombination oder Betätigung einer Startimpulstaste erfolgen kann. Die Startimpulstaste kann in einer ersten Ausführungsform nur mit einem Hilfswerkzeug, beispielsweise in Form einer Kugelschreibermine oder eines anderen Kleinstößels betätigbar sein, da die Taste gegenüber einer relativ kleinen Öffnung, von beispielsweise einer lichten Weite von bis zu 5 Millimetern, einer Wandung angeordnet ist. Gemäß einer anderen Ausführungsform ist die Startimpulstaste nur schwer zugänglich betätigbar und angeordnet, und beispielsweise an einem Verbraucher oder an beziehungsweise in einer Steuervorrichtung oder parallel beziehungsweise in Reihe zu einer Übertragungsstrecke oder hinter einer Abdeckung angeordnet, wobei die Abdeckung beispielsweise als Batterieabdeckung oder als Batteriefachverschluss oder als Möbelteilabdeckung ausgebildet ist. Ein Startimpuls, welcher automatisch erfolgt, wird durch eine nicht gesetzte Speicherzelle generiert, wobei der nicht gesetzte Zustand der Speicherzelle die Verwendung der Handbedienung für den regulären Betrieb des elektromotorischen Möbelantriebs widerspricht. Ein anderer Startimpuls, welcher in einer anderen Weise automatisch erzeugt wird, wird durch das Anlegen der Betriebsspannung an die Handbedienung generiert, was beispielsweise durch die Inbetriebnahme der Batterie erfolgt. In einer weiteren Ausgestaltung kann ein Startimpuls softwaregesteuert durch das Ausführen oder durch die Installation eines Programms generiert werden. Das Programm ist in einer Ausführung der Handbedienung mit dessen Montage in diese eingespeist oder eingebunden. Alternativ hierzu kann das Programm nachträglich in den Speicher der Handbedienung eingespeist werden. Wird das Programm installiert oder ausgeführt, so wird der Startimpuls ausgelöst. Als Programm kann in einer Ausführung eine sogenannte App (Application) vorgesehen sein, welches von einer übergeordneten Speicherstelle beziehbar ist. Eine übergeordnete Speicherstelle kann beispielsweise im Internet lokalisiert sein, z.B. als ein sogenannter App-Store oder, äquivalent, ein App-Market. Alternativ kann eine übergeordnete Speicherstelle auch innerhalb eines lokales Netzwerk angeordnet sein, welches bevorzugt als W-LAN Netzwerk (Wireless Local Area Network) ausgebildet ist.

In einer anderen Ausführung umfasst die Handbedienung ferner eine Speichereinrichtung, in welcher alle Bilder gespeichert sind, die zu möglichen Anschlusskonfigurationen des elektromotorischen Möbelantriebs gehören. So kann die Handbedienung universell eingesetzt werden.

In einer noch weiteren Ausführung kann die Handbedienung ferner eine Konfiguratoreinheit umfassen, welche zur Freigabe zur Anzeige auf der Anzeigeeinrichtung von in der Speichereinrichtung gespeicherten Bilder anhand der ermittelten Anschlusskonfiguration ausgebildet ist. Damit ist eine einfache und effiziente Zuordnung und somit Anpassung möglich. Die Konfiguratoreinheit kann z.B. auch ein Speicherregister, ein Ablaufbaustein oder als Software ausgebildet sein.

Dazu kann die Konfiguratoreinheit zur Speicherung der von der Ermittlungseinrichtung ermittelten Anschlusskonfiguration in einer Zuordnungstabelle ausgebildet sein.

In einer noch weiteren Ausführung kann die Steuervorrichtung eine Erfassungseinrichtung aufweisen, welche zur Zusammenwirkung mit der Ermittlungseinrichtung mit dieser verbindbar ist. Die Verbindung kann über die Übertragungsstrecke, welche drahtgebunden oder drahtlos als Funk- oder Infrarotstrecke ausgebildet ist, erfolgen.

In einer anderen Ausführung ist vorgesehen, dass die Erfassungseinrichtung mit einer Konfigurationsspeichereinrichtung verbindbar ist, wobei die Konfigurationsspeichereinrichtung in der Steuervorrichtung angeordnet ist und Informationen über die Anschlusskonfiguration speichert. Diese Ausführung kann auch zusätzlich in Kombination mit den anderen Ausführungen, z.B. zur Redundanz oder Prüfung, verwendet werden.

In einer noch weiteren Ausführung ist die Erfassungseinrichtung mit einer Zuleitung der Energieversorgungseinrichtung gekoppelt und zur Erfassung von Stromwerten dieser Zuleitung ausgebildet. Damit lässt sich eine einfache und schnelle Ermittlung der Anschlusskonfiguration automatisch ausführen. Es ist natürlich auch denkbar, dass dies durch den Benutzer erfolgen kann, der anhand einer entsprechenden Menüführung das Ein- und Ausschalten von einzelnen Verbrauchern oder von Verbrauchergruppierungen vornimmt.

Ein Verfahren zum Steuern eines elektromotorischen Möbelantriebs durch eine Handbedienung ist dadurch gekennzeichnet, dass eine Ermittlungseinrichtung der Handbedienung aktiviert wird, durch die eine Anschlusskonfiguration des elektromotorischen Möbelantriebs ermittelt wird. Es wird dann anhand der so ermittelten Anschlusskonfiguration durch eine Konfiguratoreinheit die Handbedienung anpasst, indem die Konfiguratoreinheit Freigaben für die der vorhandenen Anschlusskonfiguration entsprechenden Bilder erzeugt, wobei die so freigegebenen Bilder zur Anzeige auf der Anzeigeeinrichtung freigegeben werden. Bei Betätigung eines einem Bild zugeordneten Bedienungselements wird ein ebenfalls dem Bild zugeordneter Steuerbefehl von der Handbedienung an den elektromotorischen Möbelantrieb übermittelt. Auf diese Weise passt sich die Handbedienung der Konfiguration des elektromotorischen Möbelantriebs an, wodurch zum Einen die Bedienbarkeit vereinfacht wird, da nur tatsächlich vorhandene Funktionen des elektromotorischen Möbelantriebs dargestellt werden und für den Benutzer zur Auswahl stehen, und zum Anderen wird die notwendige Modellvielfalt bei den Handbedienungen verringert.

In einer vorteilhaften Ausgestaltung des Verfahrens wird zur Ermittlung der Anschlusskonfiguration eine Menüführung auf der Anzeigeeinrichtung der Handbedienung anzeigt, anhand welcher durch Betätigen von Bedienungselementen der Handbedienung die Anschlusskonfiguration eingegeben wird.

In einer weiteren vorteilhaften Ausgestaltung des Verfahrens wird zur Ermittlung der Anschlusskonfiguration automatisch eine Konfigurationsspeichereinrichtung der Steuervorrichtung ausgelesen, in welcher die Anschlusskonfiguration gespeichert ist.

In einer weiteren vorteilhaften Ausgestaltung des Verfahrens werden zur Ermittlung der Anschlusskonfiguration alle Verbraucher des elektromotorischen Möbelantriebs angesteuert, d.h. ein- und ausgeschaltet, wobei gleichzeitig durch die Erfassungseinrichtung eine Erfassung eines Stromflusses erfolgt, wobei bei ein einem Verbraucher zugehöriger Strom erfasst wird. Abhängig von dem erfassten Stromflusses wird der dabei angesteuerte Verbraucher als zu der Anschlusskonfiguration zugehörig betrachtet.

In Weiterbildung dieser Ausführungsform werden alle Verbraucher des elektromotorischen Möbelantriebs nacheinander angesteuert. Dabei werden für einen kurzen Zeitabschnitt alle Anschlüsse der Steuerung und somit alle Anschlusseinrichtungen der Steuervorrichtung nacheinander angesteuert, als Folge dessen der jeweilige Anschluss beziehungsweise die jeweilige Anschlusseinrichtung mit elektrischer Energie beaufschlagt, und zugleich der von der Erfassungseinrichtung erfasste Stromfluss erfasst. Sodann wird in einem weiteren Schritt wie eingangs beschrieben durch die Konfiguratoreinheit die Handbedienung angepasst. Kommt kein Stromfluss einer angesteuerten Anschlusseinrichtung zu Stande, so ist auch kein Verbraucher an dieser Anschlusseinrichtung angeschlossen.

Eine weitere Ausführungsform eines elektromotorischen Möbelantriebs sieht als Verstellantrieb ausgebildete Verbraucher mit integriertem Wegmesssystem vor, wobei das Wegmesssystem einen absoluten Weggeber oder einen inkrementalen Weggeber aufweist. Absolute Weggeber können beispielsweise Potentiometer sein, während für inkrementale Weggeber magnet- oder lichtempfindliche Schalter wie Hallsensoren vorgesehen sein können. Gemäß dieser besonderen Ausführungsform steht der Ausgang des Wegmesssystems oder dessen Signalaufbereitung mit der Erfassungseinrichtung in elektrischer Wirkverbindung.

Eine andere Ausführungsform sieht Anschlusseinrichtungen vor, welche mit einem Schaltkontakt in Wirkverbindung stehen. Ist ein Verbraucher mit einer Anschlusseinrichtung steckbar verbunden oder daran angeschlossen, geht das Verbinden mit einer mechanischen Handlung einher, welche bewirkt den Schaltkontakt berührungslos oder in bevorzugter Weise mechanisch gekoppelt zu schalten. Sodann wird ein elektrisches Signal ausgelöst und sodann wird in einem weiteren Schritt wie eingangs beschrieben durch die Konfiguratoreinheit die Handbedienung angepasst.

Eine andere Ausführungsform sieht Kodierungen vor, wobei jede Kodierung für eine vorbestimmte Art Verbraucher angepasst ist. Beispielsweise weisen als Verstellantriebe ausgebildete Verbraucher eine andere Kodierung auf als die von Massageeinheiten oder Heizungen, etc. Die Kodierungen können auf unterschiedliche Weise ausgestaltet sein, wobei der Anschlussstecker jedes Verbrauchers über eine hartverdrahtete Kodierung verfügt, welche durch eine vorbestimmte Pinbelegung oder durch auswertbare elektrische Bausteine, welche mit der Pinbelegung elektrisch leitend verbunden sind, gegeben ist. Als auswertbare elektrische Bauteile kommen Widerstände, Zenerdioden, Kondensatoren, etc. in Frage, wobei die Art des Verbrauchers dem charakteristischen Kennwert des elektrischen Bauteils zugeordnet ist. Eine andere Form des erwähnten elektrischen Bausteins ist durch einen Speicherbaustein gebildet, welcher mittels einer Software auslesbar ausgebildet ist, und der Speicher die Information über die Art des Verbrauchers beinhaltet. Demgemäß ist die Erfassungseinrichtung zur Erfassung einer Information beziehungsweise zur Erfassung der vorbestimmten Kodierung ausgebildet, wobei bei einem Verbraucher die zugehörige Kodierung erfasst wird. Die Kodierung wird als zu der Anschlusskonfiguration zugehörig betrachtet, dann wird anhand der so ermittelten Anschlusskonfiguration durch die Konfiguratoreinheit die Handbedienung angepasst, indem die Konfiguratoreinheit Freigaben für die der vorhandenen Anschlusskonfiguration entsprechenden Bilder erzeugt, wobei die so freigegebenen Bilder zur Anzeige auf der Anzeigeeinrichtung freigegeben werden.

In einer weiteren Ausführung des Verfahrens kann die Ermittlungseinrichtung zur Ermittlung der Anschlusskonfiguration bei einer Neuinbetriebnahme, nach Wartung, Austausch oder Nachrüstung automatisch oder durch Betätigung einer oder mehrerer Betätigungselemente an der Handbedienung oder an anderer Stelle, die dafür, allein oder in Kombination, vorgesehen sind, aktiviert werden.

Weitere Kennzeichen und Merkmale ergeben sich aus der nachfolgenden Beschreibung eines bevorzugten Ausführungsbeispiels und sind Gegenstand weiterer Unteransprüche.

Anhand der beigefügten Zeichnungen wird die Erfindung noch näher erläutert. Es zeigen:
- Figur 1: eine schematische Blockdarstellung eines ersten Ausführungsbeispiels eines erfindungsgemäßen Möbelantriebs;
- Figur 2: ein beispielhaftes Blockschaltbild einer Handbedienung;
- Figur 3: eine schematische Blockdarstellung eines zweiten Ausführungsbeispiels des erfindungsgemäßen Möbelantriebs; und
- Figur 4: eine schematische Blockdarstellung eines dritten Ausführungsbeispiels des erfindungsgemäßen Möbelantriebs.

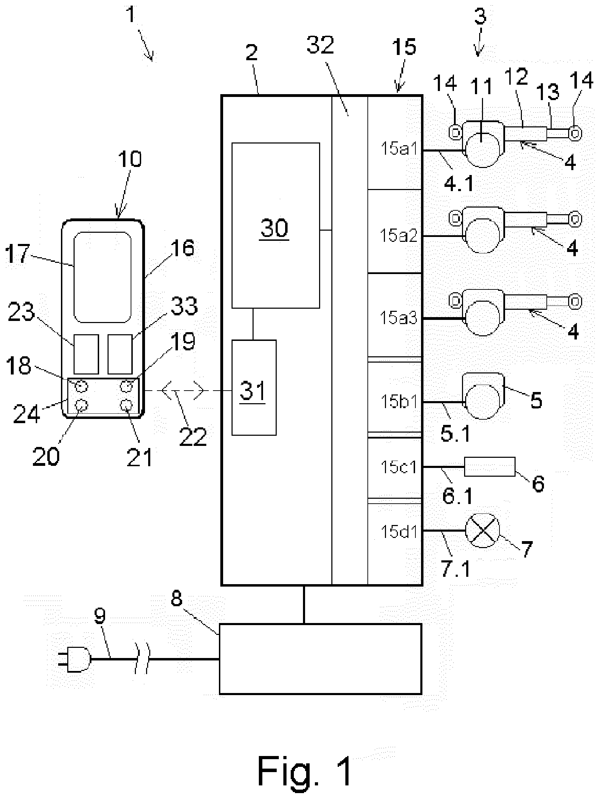

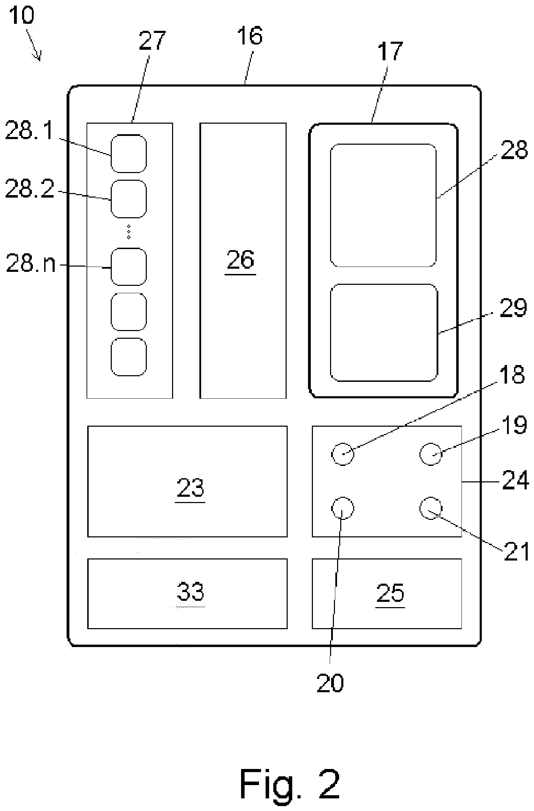

In Figur 1 ist eine schematische Blockdarstellung eines ersten Ausführungsbeispiels eines erfindungsgemäßen Möbelantriebs 1 gezeigt. Figur 2 zeigt ein beispielhaftes Blockschaltbild einer Handbedienung

Der elektromotorische Möbelantrieb 1 umfasst in diesem Ausführungsbeispiel eine Steuervorrichtung 2, drei Verstellantriebe 4 ausgebildet als Linearantriebe, einen Massageantrieb 5, eine Heizung 6, eine Leuchte 7, eine Energieversorgungseinrichtung 8 und eine Handbedienung 10.

An der Steuervorrichtung 2 sind die drei Verstellantriebe 4, der Massageantrieb 5, die Heizung 6, und die Leuchte 7 als Verbraucher in einer bestimmten Anschlusskonfiguration 3 an eine Anschlusseinrichtung 15 angeschlossen. Die gezeigte Anschlusskonfiguration 3 ist nur beispielhaft.

Die Anschlusseinrichtung 15 weist unterschiedliche Anschlussbelegungen auf, die sich in die unterschiedlichen Verbraucher unterteilen. Es können natürlich mehr Verbraucher oder weniger als die gezeigten vorhanden sein.

Die Verstellantriebe 4 sind mittels Motorleitungen 4.1 an Motoranschlüssen 15a1...3 an der Anschlusseinrichtung 15 angeschlossen. Ein Massageantriebsanschluss 15b1 ist mit dem Massageantrieb 5 über eine Antriebsleitung 5.1 verbunden. Die Heizung 6 ist mit einer Heizungsleitung 6.1 an der Anschlusseinrichtung 15 an einem Heizungsanschluss 15c1 angeschlossen, und die Leuchte 7 ist mit einer Leuchtenleitung 7.1 mit einem Leuchtenanschluss 15d1 der Anschlusseinrichtung 15 verbunden.

Die Energieversorgungseinrichtung 8 ist z.B. mit einem Trenntrafo, Gleichrichter und Siebschaltung oder als Schaltnetzteil ausgebildet. Sie ist gemäß der Darstellung nach Figur 1 über ein Netzkabel 9 mit einem Netzstecker verbunden, wobei in einer anderen und nicht näher dargestellten Ausführungsform der Netzstecker an einer ebenfalls nicht gezeigten Netzfreischaltungseinrichtung angeordnet sein kann. In einer anderen Ausgestaltung kann diese Netzfreischaltungseinrichtung in der Energieversorgungseinrichtung 8 integriert sein. Es sei noch erwähnt, dass dann die Energieversorgungseinrichtung 8 gemäß der Darstellung nach Figur 1 mit einem umhüllenden Gehäuse versehen ist, so dass der Netzstecker an dem Gehäuse angesetzt oder angeformt sein kann.

Ein Ausgang der Energieversorgungseinrichtung 8 ist über eine Versorgungsleitung mit Steuervorrichtung 2 verbunden,

In einer weiterführenden, jedoch nicht näher dargestellten Ausführungsform, ist die Energieversorgungseinrichtung 8 in dem Gehäuse der Steuervorrichtung 2 oder eines der Verstellantriebe 4 eingesetzt oder daran angesetzt, wobei einer oder zwei der Verstellantriebe 4 in nicht näher dargestellter Weise nach Art eines Doppelantriebes aufgebaut sein können, wobei wenigstens ein Elektromotor 11, jedoch vorzugsweise zwei Elektromotoren 11 in einem gemeinsamen Gehäuse aufgenommen sind.

Ein Aufbau der Verstellantriebe 4 ist an dem oberen dargestellten Verstellantrieb 4 mit Bezugszeichen stellvertretend für die anderen näher angedeutet. Die Verstellantriebe 4 weisen je nach Drehrichtung eines nicht näher dargestellten Elektromotors 11 ein Gehäuse 12 und ein- und ausfahrbares Hubrohr 13 auf, an dessen freies Ende ein Anschlussteil in Form eines Gabelkopfes 4 angebracht ist. Ein weiteres Anschlussteil in Form eines weiteren Gabelkopfes 4 ist an dem Gehäuse 12 des Verstellantriebs 4 befestigt. Das jeweilige Anschlussteil steht in nicht näher dargestellter Weise mit jeweils einem Möbelbauteil in Verbindung, so dass sich bei Betrieb des Elektromotors 11 die an dem Verstellantrieb 4 jeweils angeschlossenen Möbelbauteile relativ zueinander bewegen.

Der Massageantrieb 5 ist stellvertretend auch für mehrere angegeben und dient zum Antrieb unterschiedlicher, nicht gezeigter Massageeinrichtungen eines Möbels, beispielsweise eines Ruhesessels. Mit der Heizung 6 können z.B. Sitzflächen, Rückenflächen, Liegeflächen beheizt werden. Eine oder mehrere Leuchten 7 können z.B. als Leseleuchten, Nachtlichter u. dgl. verwendet werden.

Die Steuervorrichtung 2, die auch als Motorsteuerung bezeichnet werden kann, kann als Relaissteuerung mit Relaisschaltern oder/und als Halbleiterschaltung mit Halbleiterschaltern ausgebildet sein und ist mit einer Handbedienung 10 über eine Übertragungsstrecke 22 gekoppelt. Die Übertragungsstrecke 22 kann in drahtgebundener Form oder/und drahtlos, z.B. als Funkstrecke oder Infrarotstrecke ausgeführt sein. In diesem Ausführungsbeispiel ist die Übertragungsstrecke 22 als bidirektionale Übertragungsstrecke 22 ausgebildet.

Die Steuervorrichtung 2 weist eine Verbrauchersteuereinrichtung 30 auf, welche über eine Verbraucherschalteinheit 32 die an der Anschlusseinrichtung 15 angeschlossenen Verbraucher 4, 5, 6, 7 gemäß Betätigung der Handbedienung 10 schaltet. Die Verbraucherschalteinheit 32 weist Relaisschaltern oder/und Halbleiterschalter auf. Ferner ist die Steuervorrichtung 2 mit einer versehen, welche mit der Handbedienung 10 über die Übertragungsstrecke 22 verbunden ist. Die Verbraucherübertragungseinrichtung 31 ist dazu mit einem Sender/Empfänger für die bidirektionale Übertragungsstrecke 22 ausgestattet.

Mittels der Handbedienung 10 sind z.B. über Steuerströme die Relaisschalter bzw. die Halbleiterschalter ein- und ausschaltbar, wobei die Leistungsschalter der Relaisschalter bzw. der Halbleiterschalter den hohen Motorstrom des jeweiligen Verbrauchers 4, 5, 6, 7 schalten.

Die Handbedienung 10 umfasst ein Handbedienungsgehäuse 16, mindestens eine Anzeigeeinrichtung 17, eine Bedienungssteuereinrichtung 23, eine Bedienungseinheit 24 mit Anzeigebedienungselementen 18, 19 und Schaltbedienungselementen 20, 21, und eine Ermittlungseinheit 33.

Die mindestens eine Anzeigeeinrichtung 17, Bedienungssteuereinrichtung 23 und Bedienungseinheit 24 sind in dem Handbedienungsgehäuse 16 angeordnet.

Die mindestens eine Anzeigeeinrichtung 17 ist ein vollgrafisches Display oder/und ein Display mit vorgebrannten Bildern. Auf der Anzeigeeinrichtung 17 sind die Verbraucher 4, 5, 6, 7 mit ihren Funktionen grafisch in Bildern 28 (siehe Figur 2) dargestellt. Falls aus Platzgründen und der Übersichtlichkeit wegen auf der Anzeigeeinrichtung 17 nicht alle Verbraucher mit allen Funktionen abgebildet werden können, sind die zu einem jeweiligen Verbraucher gehörenden Bilder 28 mittels der Anzeigebedienungselemente 18, 19 umschaltbar.

Die Bilder 28 sind als einzelne Bilder 28.1...28.n in einer Speichereinrichtung 27 der Handbedienung 10 gespeichert.

So kann z.B. ein Bild 28.1 mit Symbolen zu den Verstellantrieben 4, ein weiteres Bild 28.2 mit Symbolen für Massagefunktionen des Massageantriebs 5, ein noch weiteres Bild 28.3 mit Symbolen für den Betriebszustand der Heizung 6 mit Temperaturangabe, und ein noch weiteres Bild 28.4 für den Schaltzustand der Leuchte 7 angezeigt werden.

Die jeweiligen Funktionen, z.B. Verstellen eines Verstellantriebs 4 in eine Richtung und in die Gegenrichtung, oder Ein-/Ausschalten der Heizung 6, sind in den Bildern 28 mit einschlägigen Symbolen gekennzeichnet und können mit den Schaltbedienungselementen 20, 21 betätigt werden. Die Anzeigebedienungselemente 18, 19 und/oder die Schaltbedienungselemente 20, 21 können auf der Anzeigeeinrichtung 17 als Berührungsschalter (Touchscreenschalter) ausgebildet sein oder separate Schaltelemente, z.B. Folientaster oder elektromechanische Schalter/Taster, sein.

In der Speichereinrichtung 27 der Handbedienung 10 sind alle Bilder 28.1...28.n gespeichert, die zu möglichen Anschlusskonfigurationen 3 des elektromotorischen Möbelantriebs 1 gehören. Je nach der Anschlusskonfiguration 3 können aber nur diejenigen Bilder 28 von einem Benutzer mit den Anzeigebedienungselementen 18, 19 auf der Anzeigeeinrichtung 17 durch ein so genanntes "Umblättern" sichtbar gemacht werden, welche der jeweiligen vorhandenen Anschlusskonfiguration 3 entsprechen. Mit anderen Worten, die Handbedienung 10 ermittelt die Anschlusskonfiguration 3 des elektromotorischen Möbelantriebs 1 automatisch, mit dem sie verbunden ist.

Es kann ferner noch vorgesehen sein, den Bediener über die erfolgten Aktionen zu informieren. Handbedienungen des Standes der Technik weisen einen Sprungkontakt auf, wobei der Bediener anhand der Haptik die erfolgte Eingabe des Tastbefehls erkennen kann. In der Ausführung einer Handbedienung mit einem Display erfolgt die Information des Bedieners durch ein im Display dargestelltes Bild. Hierzu kann sich ein Bildbereich farblich oder gestalterisch verändern, um dem Bediener den von dem Steuerprogramm erkannten Befehl anzuzeigen. Alternativ hierzu kann ein zusätzliches Bild im Display angezeigt werden, um dem Bediener den von dem Steuerprogramm erkannten Befehl anzuzeigen. Darüber hinaus ist es ebenfalls denkbar, dass das Programm ein akustisches Signal oder ein haptisch erkennbares Vibrationssignal an das jeweilige Ausgabegerät der Handbedienung anlegt. Derartige Handbedienungen können, wie eingangs beschrieben, als Mobiltelefon, als Smartphone, als Tablet-PC oder dergleichen ausgebildet sein.

Dazu zeigt Figur 2 ein beispielhaftes Blockschaltbild der Handbedienung 10. Sie umfasst die mindestens eine Anzeigeeinrichtung 17, die Bedienungssteuereinrichtung 23, die Bedienungseinheit 24 mit Anzeigebedienungselementen 18, 19 und Schaltbedienungselementen 20, 21, eine Übertragungseinheit 25, eine Konfiguratoreinheit 26, die Speichereinrichtung 27 und die Ermittlungseinheit 33.

Die Bedienungssteuereinrichtung 23 ist z.B. ein Mikrocomputer, welcher mit der mindestens einen Anzeigeeinrichtung 17, der Bedienungseinheit 24, der Übertragungseinheit 25, der Konfiguratoreinheit 26, der Speichereinrichtung 27 und der Ermittlungseinheit 33 verbunden ist.

Die Übertragungseinheit 25 der Handbedienung ist mit einem Sender/Empfänger für die bidirektionale Übertragungsstrecke 22 ausgestattet, um mit der Verbraucherübertragungseinrichtung 31 zu kommunizieren. Über diese Übertragungsstrecke 22 werden Steuerbefehle zur Steuerung des elektromotorischen Möbelantriebs 1 übertragen und auch wie Informationen zur Ermittlung des Anschlusskonfiguration 3.

Die Bedienungssteuereinrichtung 23 kommuniziert mittels der Übertragungseinheit 25 mit der Verbraucherübertragungseinrichtung 31 der Steuervorrichtung 2 und ermittelt deren Anschlusskonfiguration 3, beispielsweise bei Neuinbetriebnahme des elektromotorischen Möbelantriebs 1, mittels Aktivierung der Ermittlungseinheit 33. Diese Ermittlung wird unten noch ausführlicher beschrieben. Die ermittelte Anschlusskonfiguration 3 wird in der Konfiguratoreinheit 26 abgelegt. Die Konfiguratoreinheit 26 erzeugt dementsprechend Freigaben für die der vorhandenen Anschlusskonfiguration 3 entsprechenden Bilder 28.1...28.n. Beispielsweise weist die Speichereinrichtung 27 oder die Konfiguratoreinheit 26 eine Zuordnungstabelle auf, in welcher durch Setzen eines Freigabebits die entsprechenden Bilder 28.1...28n zum Zugriff zur Anzeige auf der Anzeigeeinrichtung 17 freigegeben sind.

Außerdem können in einem oder auch mehreren Zusatzbildern 29 durch die Konfiguratoreinheit 26 zusätzliche Informationen zu den jeweiligen freigegebenen Bildern 28.1...28.n angezeigt werden. Diese zusätzlichen Informationen können z.B. die Temperatur der Heizung 6 betreffen. Natürlich sind auch viele andere Informationen möglich, die für den Benutzer wichtig sind.

Die Ermittlung der Anschlusskonfiguration 3 kann in diesem ersten Ausführungsbeispiel nach Figur 1 durch Menüführung auf der Anzeigeeinrichtung 17 der Handbedienung 10 erfolgen, was durch die Ermittlungseinrichtung 33 ausgeführt wird. Gesteuert durch die Ermittlungseinrichtung 33 und/oder die Bedienungssteuereinrichtung 23 zeigt die Anzeigeeinrichtung 17, z.B. als Zusatzbild 29, dem Benutzer bei Neuinbetriebnahme Fragen an, die der Benutzer durch einfaches Drücken von Bedienungselementen 18, 19, 20, 21 der Bedienungseinheit beantwortet. So ermittelt die Ermittlungseinrichtung 23 die Anschlusskonfiguration 3 und übermittelt sie der Konfiguratoreinheit 26 für die Zuordnungstabelle. Die Ermittlungseinrichtung 33 kann z.B. auch ein Bestandteil der Bedienungssteuereinrichtung 23 sein, beispielsweise ein Programmteil.

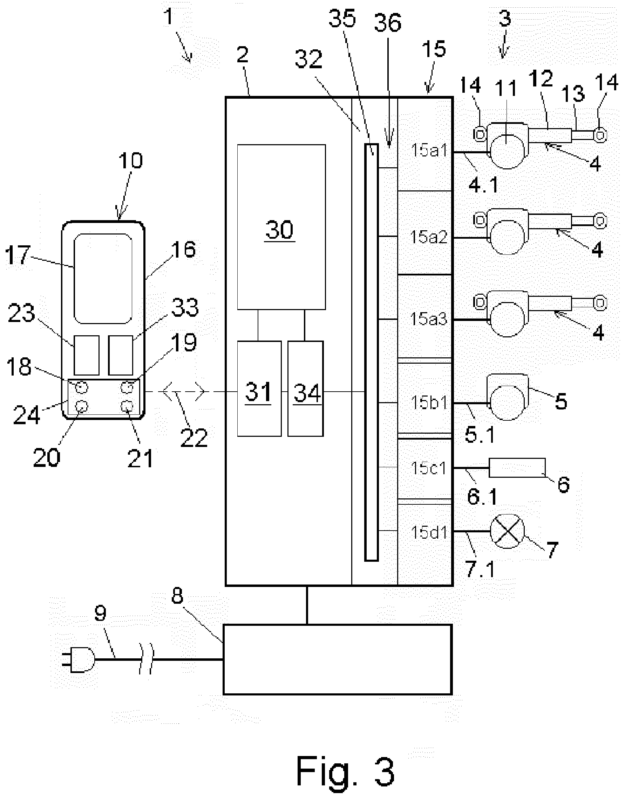

Figur 3 zeigt eine schematische Blockdarstellung eines zweiten Ausführungsbeispiels des erfindungsgemäßen Möbelantriebs 1.

In diesem zweiten Ausführungsbeispiel ist die Steuervorrichtung 2 mit einer Erfassungseinrichtung 34 und einer Konfigurationsspeichereinrichtung 35 versehen.

Die Erfassungseinrichtung 34 ist mit der Verbrauchersteuereinrichtung 30, der Verbraucherübertragungseinrichtung 31 und mit der Konfigurationsspeichereinrichtung 35 verbunden.

Die Konfigurationsspeichereinrichtung 35 weist eine Zuordnung der Anschlüsse 15a...15d der Anschlusseinrichtung 15 zu den Verbrauchern auf. Eine solche Zuordnung und Speicherung kann auf unterschiedliche Weise realisiert sein.

Hierzu sind in der Figur 3 Verbindungsstriche mit dem Bezugszeichen 36 als Konfigurationsmeldeelemente angedeutet. Diese können wie folgt ausgeführt sein.

In einer Variante des zweiten Ausführungsbeispiels besitzt jeder Anschluss einen elektromechanischen Kontakt (z.B. durch Stift oder Magnet am Steckverbinder eines Verbrauchers), der ein- oder ausgeschaltet ist, wenn ein Verbraucher an dem jeweiligen Anschluss angeschlossen ist. Dies kann auch als mehrpoliger Stecker mit binärer Kodierung ausgeführt sein.

In einer anderen Variante weist jeder Stecker oder Verbraucher eine elektrische Kodierung, z.B. einen Widerstand, einen Kondensator, einen RC-Kreis, einen LC-Kreis, einen RFID-Chip o.dgl. auf, welcher von der Konfigurationsspeichereinrichtung 35 erkannt und dem jeweiligen Anschluss zugeordnet wird.

In noch einer anderen Variante kann die Konfigurationsspeichereinrichtung 35 eine Anordnung von Schaltern (DIP-Schalter, DIP-Array o.ä.) sein, welche bei der Konfiguration des elektromotorischen Möbelantriebs 1 entsprechend der jeweiligen Anschlusskonfiguration 3 eingestellt wird.

Die Erfassungseinrichtung 34 ist so ausgelegt, dass sie von der Ermittlungseinrichtung 33 zur Ermittlung der Anschlusskonfiguration 3 über die Verbraucherübertragungseinrichtung 31 aktiviert wird und dabei die von der Konfigurationsspeichereinrichtung 35 gespeicherte Anschlusskonfiguration 3 ausliest, signaltechnisch aufbereitet und an die Ermittlungseinrichtung 33 gesteuert durch die Bedienungssteuereinrichtung 23 überträgt.

Dies kann erfolgen, indem alle Verbraucher gleichzeitig und für kurze Zeitdauer eingeschaltet werden. Alternativ werden die Verbraucher einzeln und in einer vorbestimmten Reihenfolge für eine kurze Zeitdauer eingeschaltet. In einer Ausführung erfasst die Erfassungseinrichtung 34 den Charakter des Stromverlaufes innerhalb dieser Zeitdauer und klassifiziert den Verbraucher. Typische Verbraucher weisen eine zweiadrige Anschlussleitung auf, wobei der Anschlussstecker des Verbrauches ebenfalls zweipolig ist. Andere Anschlussstecker weisen weitere Anschlüsse auf, wobei eine eingangs genannte Codierung mit weiteren Anschlüssen verbunden ist. Die Codierung kann als RC-, LC-, R-Glied ausgebildet sein oder eine binäre Verdrahtung aufweisen. Die Information, beispielsweise in welcher Spanne ein mit dem weiteren Anschluss verbundener elektrischer Widerstand angeordnet ist, wird mit einem Tabelleneintrag des Programms verglichen, wobei die Erfassungseinrichtung die Höhe des beispielhaften Widerstandswerts ermittelt. Die zuvor genannte Zeitdauer kann typischerweise bis zu einer halben Sekunde betragen.

Die Verbindung der Erfassungseinrichtung 34 zur Verbrauchersteuereinrichtung 30 kann verwendet werden, um über die Verbrauchersteuereinrichtung 30, falls erforderlich, einen Verbraucher zur zusätzlichen Verifizierung eines Anschlusses ein- und auszuschalten. Mit anderen Worten, um eine Prüfung der in der Konfigurationsspeichereinrichtung 35 gespeicherte Anschlusskonfiguration 3 vorzunehmen, wenn dies von der Ermittlungseinrichtung 33 angefordert wird.

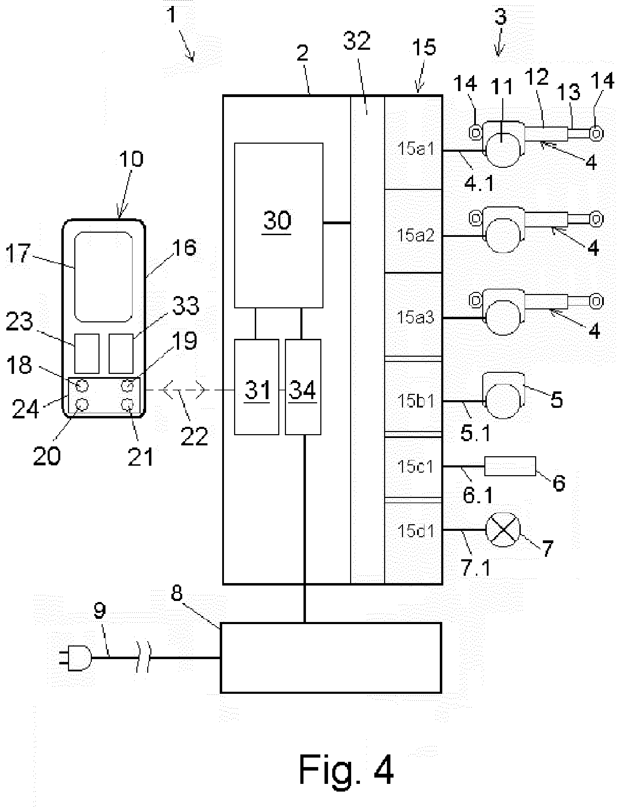

In Figur 4 ist eine schematische Blockdarstellung eines dritten Ausführungsbeispiels des erfindungsgemäßen Möbelantriebs 1 gezeigt.

Im Unterschied zum zweiten Ausführungsbeispiel ist hier keine Konfigurationsspeichereinrichtung 35 vorgesehen. Die Erfassungseinrichtung 34 ist mit einer Stromzuleitung von der Energieversorgungseinrichtung 8 für die Verbraucher verbunden, welche elektrische Versorgungsenergie an die Verbrauchersteuereinrichtung 30 leitet. Die Erfassungseinrichtung 34 ist hier mit einer Strommesseinrichtung ausgebildet, die nicht näher gezeigt ist. Wird nun von der Ermittlungseinrichtung 33 zur Ermittlung der Anschlusskonfiguration 3 die Erfassungseinrichtung 34 aktiviert, so schaltet die Ermittlungseinrichtung 33 nun über die Verbrauchersteuereinrichtung 30 alle Anschlüsse der Anschlusseinrichtung 15 nacheinander kurz ein und aus und ermittelt dabei jedes Mal mittels der Erfassungseinrichtung 34, ob von der Energieversorgungseinrichtung 8 ein zu dem jeweils eingeschalteten Anschluss der Anschlusseinrichtung 15 Strom fließt. Ist an der dem jeweils eingeschalteten Anschluss der Anschlusseinrichtung 15 ein Verbraucher angeschlossen, fließt ein entsprechender Strom, der sich von dem Versorgungsstrom für die Verbrauchersteuereinrichtung 30 und das jeweils eingeschaltete Schaltelement messbar unterscheidet. Auf diese Weise werden alle Anschlüsse sukzessive abgearbeitet und die Anschlusskonfiguration 3 durch die Ermittlungseinrichtung 33 ermittelt und gespeichert wie oben beschrieben.

Die Ermittlung der Anschlusskonfiguration 3 des elektromotorischen Möbelantriebs 1 und Anpassung der Handbedienung 10 kann wie folgt durchgeführt werden.

Bei einer Neuinbetriebnahme, nach Wartung, Austausch oder Nachrüstung erfolgt ein Start der Ermittlungseinrichtung 33 zur Ermittlung automatisch oder durch Betätigung einer oder mehrerer Betätigungselemente, die dafür, allein oder in Kombination, vorgesehen sind.

Die kann in dem ersten Ausführungsbeispiel nach Figur 1 durch Menüführung auf der Anzeigeeinrichtung 17 der Handbedienung 10 erfolgen, indem angezeigte Fragen durch Betätigen von Bedienungselementen 18, 19, 20, 21 der Bedienungseinheit beantwortet werden.

Zur Ermittlung der Anschlusskonfiguration 3 aktiviert die Ermittlungseinrichtung 33 in dem zweiten und dritten Ausführungsbeispiel über die Übertragungsstrecke 22 mit den dazugehörigen Übertragungseinheiten/-einrichtungen 25, 31 die Erfassungseinrichtung 34 in der Steuervorrichtung 2.

Dazu wird im zweiten Ausführungsbeispiel eine Konfigurationsspeichereinrichtung 35 ausgelesen, in welcher die Anschlusskonfiguration 3 gespeichert ist.

Im dritten Ausführungsbeispiel werden dazu von der Ermittlungseinrichtung 33 in der Handbedienung 10 alle Anschlüsse der Anschlusseinrichtung 15 angesteuert, d.h. ein- und ausgeschaltet, wobei gleichzeitig durch die Erfassungseinrichtung 34 eine Erfassung eines Stromflusses erfolgt. Wird dabei ein einem Verbraucher zugehöriger Strom erfasst, so wird der dabei angesteuerte Anschluss als mit dem zugehörigen Verbraucher verbunden betrachtet.

Die so ermittelte Anschlusskonfiguration 3 wird in der Konfiguratoreinheit 26 abgelegt. Die Konfiguratoreinheit 26 erzeugt dementsprechend Freigaben für die der vorhandenen Anschlusskonfiguration 3 entsprechenden Bilder 28.1...28.n. Diese Bilder 28.1...28n, welche zu der ermittelten Anschlusskonfiguration 3 gehören, sind somit zum Zugriff zur Anzeige auf der Anzeigeeinrichtung 17 freigegeben.

Die oben beschriebenen Ausführungsbeispiele schränken die Erfindung nicht ein. Sie ist im Rahmen der beigefügten Ansprüche modifizierbar.

So ist es denkbar, dass die Konfiguratoreinheit 26 Bestandteil der Bedienungssteuereinrichtung 23 oder der Ermittlungseinrichtung 33 ist.

Bei einem menügeführten manuellen Eingeben oder Ermitteln der Anschlusskonfiguration 3 können zwei der Bedienungselemente 18, 19, 20, 21 als so genannte Zweihandbedienung verwendet werden, um die Ermittlung zu starten.

Es ist auch möglich, dass durch die Ermittlungseinrichtung 33 gesteuert die Anzeigeeinrichtung z.B. als Zusatzbild 29 dem Benutzer bei Neuinbetriebnahme anzeigt, welche einzelnen Verbraucher er durch Anweisung kurzzeitig ein- und ausschalten soll.

Eine Ermittlung kann auch durch eine so genannte Kugelschreibertaste an der Handbedienung oder/und einen Starttaster an anderer Stelle eingeleitet werden, z.B. auch nach Wartung oder Austausch bzw. Nachrüstung von Verbrauchern.

Die Energieversorgungseinrichtung 8 kann mit einer Hilfsenergiequelle versehen sein, welche z.B. eine Batterie, ein Akkumulator oder/und ein Kondensator sein kann. Damit wird auch eine Notabsenkungsfunktion möglich. Es ist auch möglich, dass die Energieversorgungseinrichtung 8 eine Batterie und/oder ein Akkumulator ist.

### Bezugszeichenliste

- 1: Elektromotorischer Möbelantrieb
- 2: Steuervorrichtung
- 3: Anschlusskonfiguration
- 4: Verstellantrieb
- 4.1: Motorleitung
- 5: Massageantrieb
- 5.1: Antriebsleitung
- 6: Heizung
- 6.1: Heizungsleitung
- 7: Leuchte
- 7.1: Leuchtenleitung
- 8: Energieversorgungseinrichtung
- 9: Netzanschlusskabel
- 10: Handbedienung
- 11: Elektromotor
- 12: Antriebsgehäuse
- 13: Hubrohr
- 14: Gabelkopf
- 15: Anschlusseinrichtung
- 15a1...3: Motoranschlüsse
- 15b1: Massageantriebsanschluss
- 15c1: Heizungsanschluss
- 15d1: Leuchtenanschluss
- 16: Handbedienungsgehäuse
- 17: Anzeigeeinrichtung
- 18, 19: Anzeigebedienungselemente
- 20, 21: Schaltbedienungselemente
- 22: Übertragungsstrecke
- 23: Bedienungssteuereinrichtung
- 24: Bedienungseinheit
- 25: Übertragungseinheit
- 26: Konfiguratoreinheit
- 27: Speichereinrichtung
- 28, 28.1...28.n: Darstellung
- 29: Zusatzdarstellung
- 30: Verbrauchersteuereinrichtung
- 31: Verbraucherübertragungseinrichtung
- 32: Verbraucherschalteinheit
- 33: Ermittlungseinrichtung
- 34: Erfassungseinrichtung
- 35: Konfigurationsspeichereinrichtung
- 36: Konfigurationsmeldeelement

## Patentansprüche

1. Elektromotorischer Möbelantrieb (1) mit einer Steuervorrichtung (2), einer Energieversorgungseinrichtung (8), einer Handbedienung (10), die über eine bidirektionale Übertragungsstrecke (22) mit der Steuervorrichtung (2) gekoppelt ist, und mit einer Anschlusskonfiguration (3) mit mindestens einem elektromotorischen Verbraucher, wobei die Anschlusskonfiguration (3) angibt, welche Art von Verbraucher an dem dafür vorbestimmten Anschluss der Steuervorrichtung (2) des elektromotorischen Möbelantriebs (1) angeschlossen ist, wobei die Handbedienung (10) mindestens eine Anzeigeeinrichtung (17) zur Anzeige von gespeicherten Bildern (28.1...28.n) zur Bedienung aufweist, **dadurch gekennzeichnet, dass** die Handbedienung (10) eine Ermittlungseinrichtung (33) zur Ermittlung der Anschlusskonfiguration (3) aufweist, und dass
die Ermittlungseinrichtung (33) derart ausgebildet ist, dass die Ermittlungseinrichtung (33) durch eine Aktivierung eine Anschlusskonfiguration (3) des elektromotorischen Möbelantriebs (1) ermittelt, dass anhand der so ermittelten Anschlusskonfiguration (3) eine Konfiguratoreinheit (26) die Handbedienung (10) anpasst, indem sie Freigaben für die der vorhandenen Anschlusskonfiguration (3) entsprechenden Bilder (28.1...28.n) erzeugt, wobei die so freigegebenen Bilder (28.1...28n) zur Anzeige auf der Anzeigeeinrichtung (17) freigegeben werden, und dass bei Betätigung eines einem der Bilder (28.1...28.n) zugeordneten Bedienungselementen (18, 19, 20, 21) ein ebenfalls dem Bild (28.1...28.n) zugeordneter Steuerbefehl von der Handbedienung (10) an den elektromotorischen Möbelantrieb (1) übermittelt wird.

2. Elektromotorischer Möbelantrieb (1) nach Anspruch 1, **dadurch gekennzeichnet, dass** die Ermittlungseinrichtung (33) bei einer Neuinbetriebnahme, nach Wartung, Austausch oder Nachrüstung des elektromotorischen Möbelantriebs (1) manuell oder/und automatisch aktivierbar ist.

3. Elektromotorischer Möbelantrieb (1) nach Anspruch 2, **dadurch gekennzeichnet, dass** die Ermittlungseinrichtung (33) zur Erzeugung und Anzeige einer Menüführung zur manuellen Ermittlung der Anschlusskonfiguration (3) durch einen Benutzer auf der Anzeigeeinrichtung (17) ausgebildet ist.

4. Elektromotorischer Möbelantrieb (1) nach Anspruch 2 oder 3, **dadurch gekennzeichnet, dass** die Ermittlungseinrichtung (33) zum Auslesen von in der Steuervorrichtung (2) gespeicherten Daten zur Ermittlung der Anschlusskonfiguration (3) ausgebildet ist.

5. Elektromotorischer Möbelantrieb (1) nach einem der Ansprüche 2 bis 4, **dadurch gekennzeichnet, dass** die Ermittlungseinrichtung (33) für eine automatische Ansteuerung aller angeschlossenen Verbraucher ausgebildet ist.

6. Elektromotorischer Möbelantrieb (1) nach einem der vorhergehenden Ansprüche, **dadurch gekennzeichnet, dass** die Handbedienung (10) ferner eine Speichereinrichtung (27) umfasst, in welcher alle Bilder (28.1...28.n) gespeichert sind, die zu möglichen Anschlusskonfigurationen (3) des elektromotorischen Möbelantriebs (1) gehören.

7. Elektromotorischer Möbelantrieb (1) nach Anspruch 6, **dadurch gekennzeichnet, dass** die Handbedienung (10) ferner die Konfiguratoreinheit (26) umfasst, welche zur Freigabe zur Anzeige auf der Anzeigeeinrichtung (17) von in der Speichereinrichtung (27) gespeicherten Bilder (28.1...28.n) anhand der ermittelten Anschlusskonfiguration (3) ausgebildet ist.

8. Elektromotorischer Möbelantrieb (1) nach Anspruch 7, **dadurch gekennzeichnet, dass** die Konfiguratoreinheit (26) zur Speicherung der von der Ermittlungseinrichtung (33) ermittelten Anschlusskonfiguration (3) in einer Zuordnungstabelle ausgebildet ist.

9. Elektromotorischer Möbelantrieb (1) nach einem oder mehreren der vorhergehenden Ansprüche, **dadurch gekennzeichnet, dass** die Steuervorrichtung (2) eine Erfassungseinrichtung (34) aufweist, welche zur Zusammenwirkung mit der Ermittlungseinrichtung (33) mit dieser verbindbar ist.

10. Elektromotorischer Möbelantrieb (1) nach Anspruch 9, **dadurch gekennzeichnet, dass** die Erfassungseinrichtung (34) mit einer Konfigurationsspeichereinrichtung (35) verbindbar ist, wobei die Konfigurationsspeichereinrichtung (35) in der Steuervorrichtung (2) angeordnet ist und Informationen über die Anschlusskonfiguration (3) speichert.

11. Elektromotorischer Möbelantrieb (1) nach Anspruch 9 oder 10, **dadurch gekennzeichnet, dass** die Erfassungseinrichtung (34) mit einer Zuleitung der Energieversorgungseinrichtung (8) gekoppelt und zur Erfassung von Stromwerten dieser Zuleitung ausgebildet ist.

12. Verfahren zum Steuern eines elektromotorischen Möbelantriebs (1) durch eine Handbedienung (10), **dadurch gekennzeichnet, dass** eine Ermittlungseinrichtung (33) der Handbedienung (10) aktiviert wird, durch die eine Anschlusskonfiguration des elektromotorischen Möbelantriebs ermittelt wird, wobei die Anschlusskonfiguration (3) angibt, welche Art von Verbraucher an dem dafür vorbestimmten Anschluss der Steuervorrichtung (2) des elektromotorischen Möbelantriebs (1) angeschlossen ist, dass anhand der so ermittelten Anschlusskonfiguration (3) eine Konfiguratoreinheit (26) die Handbedienung (10) anpasst, indem sie Freigaben für die der vorhandenen Anschlusskonfiguration (3) entsprechenden Bilder (28.1...28.n) erzeugt, wobei die so freigegebenen Bilder (28.1...28n) zur Anzeige auf der Anzeigeeinrichtung (17) freigegeben werden, und dass bei Betätigung eines einem der Bilder (28.1...28.n) zugeordneten Bedienungselementen (18, 19, 20, 21) ein ebenfalls dem Bild (28.1...28.n) zugeordneter Steuerbefehl von der Handbedienung an den elektromotorischen Möbelantrieb (1) übermittelt wird.

13. Verfahren nach Anspruch 12, bei dem zur Ermittlung der Anschlusskonfiguration (3) eine Menüführung auf der Anzeigeeinrichtung (17) der Handbedienung (10) anzeigt wird, anhand welcher durch Betätigen von Bedienungselementen (18, 19, 20, 21) der Handbedienung (10) die Anschlusskonfiguration (3) eingegeben wird.

14. Verfahren nach Anspruch 12, bei dem zur Ermittlung der Anschlusskonfiguration (3) die Ermittlungseinrichtung (33) automatisch eine Konfigurationsspeichereinrichtung (35) einer Steuervorrichtung (2) des elektromotorischen Möbelantriebs (1) ausliest, in welcher die Anschlusskonfiguration (3) gespeichert ist.

15. Verfahren nach Anspruch 12, bei dem zur Ermittlung der Anschlusskonfiguration (3) die Ermittlungseinrichtung (33) alle Verbraucher des elektromotorischen Möbelantriebs (1) ansteuert, d.h. ein- und ausschaltet, wobei gleichzeitig durch die Erfassungseinrichtung (34) eine Erfassung eines Stromflusses erfolgt, wobei bei ein einem Verbraucher zugehöriger Strom erfasst wird, wobei der dabei angesteuerte Verbraucher abhängig von dem erfassten Stromfluss als zu der Anschlusskonfiguration (3) zugehörig betrachtet wird.

16. Verfahren nach einem der Ansprüche 12 bis 15, **dadurch gekennzeichnet, dass** die Ermittlungseinrichtung (33) zur Ermittlung der Anschlusskonfiguration (3) bei einer Neuinbetriebnahme, nach Wartung, Austausch oder Nachrüstung oder nach Installation eines Programms oder nach Start eines Programms auf der Handbedienung (10) automatisch oder durch Betätigung einer oder mehrerer Betätigungselemente (18, 19, 20, 21) an der Handbedienung (10) oder an anderer Stelle, die dafür, allein oder in Kombination, vorgesehen sind, aktiviert wird.

## Claims

1. An electromotive furniture drive (1) having a control device (2), a power supply apparatus (8), a handheld control (10), which is coupled via a bidirectional transmission link (22) to the control device (2), and having a terminal configuration (3) having at least one electromotive consumer, whereby the terminal configuration (3) indicates what kind of consumer is connected to the to the designated port of the control device (2), wherein the handheld control (10) has at least one display apparatus (17) for displaying stored images (28.1... 28.n) for operation,
**characterized in that** the handheld control (10) has an ascertainment apparatus (33), which is implemented to ascertain the terminal configuration (3), that the ascertainment apparatus (33) is implemented in such a way that by means of an activation of the ascertainment apparatus (33) a terminal configuration of the electromotive furniture drive is ascertained, that a configurator unit (26) adapts the handheld control (10) on the basis of the terminal configuration (3) thus ascertained, **in that** it generates releases for the images (28.1... 28.n) corresponding to the provided terminal configuration (3), wherein the images (28.1... 28.n) thus released are released for display on the display apparatus (17), and upon actuation of an operating element (18, 19, 20, 21) assigned to the images (28.1... 28.n), a control command, which is also assigned to the image (28.1... 28.n), is transmitted from the handheld control to the electromotive furniture drive (1)..

2. The electromotive furniture drive (1) according to Claim 1, **characterized in that** the ascertainment apparatus (33) is manually and/or automatically activatable when a new item is put into operation, or after maintenance, replacement, or refitting of the electromotive furniture drive (1).

3. The electromotive furniture drive (1) according to Claim 2, **characterized in that** the ascertainment apparatus (33) is implemented to generate and display a menu guide for the manual ascertainment of the terminal configuration (3) by a user on the display apparatus (17).

4. The electromotive furniture drive (1) according to Claim 2 or 3, **characterized in that** the ascertainment apparatus (33) is implemented to read out data stored in the control device (2) to ascertain the terminal configuration (3).

5. The electromotive furniture drive (1) according to one of Claims 2 to 4, **characterized in that** the ascertainment apparatus (33) is implemented for an automatic activation of all connected consumers.

6. The electromotive furniture drive (1) according to one of the preceding claims, **characterized in that** the handheld control (10) further comprises a storage apparatus (27) in which all images (28.1... 28.n) are stored, which are associated with possible terminal configurations (3) of the electromotive furniture drive (1).

7. The electromotive furniture drive (1) according to Claim 6, **characterized in that** the handheld control (10) further comprises a configurator unit (26), which is implemented for the release for display on the display apparatus (17) of images (28.1... 28.n) stored in the storage apparatus (27) on the basis of the ascertained terminal configuration (3).

8. The electromotive furniture drives (1) according to Claim 7, **characterized in that** the configurator unit (26) is implemented for storage of the terminal configuration (3) ascertained by the ascertainment apparatus (33) in an assignment table.

9. The electromotive furniture drive (1) according to one or more of the preceding claims, **characterized in that** the control device (2) has a registration apparatus (34), which is connectable to the ascertainment apparatus (33) to cooperate therewith.

10. The electromotive furniture drive (1) according to Claim 9, **characterized in that** the registration apparatus (34) is connectable to a configuration storage apparatus (35), wherein the configuration storage apparatus (35) is arranged in the control device (2) and stores items of information about the terminal configuration (3).

11. The electromotive furniture drive (1) according to Claim 9 or 10, **characterized in that** the registration apparatus (34) is coupled to a supply line of the power supply apparatus (8) and is implemented to register current values of this supply line.

12. A method for controlling an electromotive furniture drive (1) by a handheld control (10), **characterized in that** an ascertainment apparatus (33) of the handheld control (10) is activated, by which a terminal configuration of the electromotive furniture drive is ascertained, whereby the terminal configuration (3) indicates what kind of consumer is connected to the to the designated port of the control device (2), and that a configurator unit (26) adapts the handheld control (10) on the basis of the terminal configuration (3) thus ascertained, **in that** it generates releases for the images (28.1... 28.n) corresponding to the provided terminal configuration (3), wherein the images (28.1... 28.n) thus released are released for display on the display apparatus (17), and upon actuation of an operating element (18, 19, 20, 21) assigned to the images (28.1... 28.n), a control command, which is also assigned to the image (28.1... 28.n), is transmitted from the handheld control to the electromotive furniture drive (1).

13. The method according to Claim 12, wherein to ascertain the terminal configuration (3), a menu guide is displayed on the display apparatus (17) of the handheld control (10), on the basis of which the terminal configuration (3) is input by actuating operating elements (18, 19, 20, 21) of the handheld control (10).

14. The method according to Claim 12, wherein to ascertain the terminal configuration (3), the ascertainment apparatus (33) automatically reads out a configuration storage apparatus (35) of a control device (2) of the electromotive furniture drive (1), in which the terminal configuration (3) is stored.

15. The method according to Claim 12, wherein to ascertain the terminal configuration (3), the ascertainment apparatus (33) activates, i.e., turns on and off, all consumers of the electromotive furniture drive (1), wherein simultaneously a registration of a current flow is performed by the registration apparatus (34), wherein in the event a current associated with a consumer is registered, wherein the activated consumer is considered to be associated with the terminal configuration (3) depending on the registered current flow.

16. The method according to one of Claims 12 to 15, **characterized in that** the ascertainment apparatus (33) is activated to ascertain the terminal configuration (3) when a new item is put into operation, after maintenance, replacement, or refitting, or after installation of a program or after a start of a program on the handheld control (10) automatically or by actuating one or more actuating elements (18, 19, 20, 21) on the handheld control (10) or at another location, which are provided for this purpose, alone or in combination.

## Revendications

1. Entrainement de meuble (1) par un moteur électrique comportant un dispositif de commande (2), une installation d'alimentation en énergie (8), une télécommande (10) couplée par un chemin de transmission bidirectionnelle (22) au dispositif de commande (2) et une configuration de branchement (3) avec au moins un consommateur à moteur électrique,
- la configuration de branchement (3) indiquant le type de consommateur au branchement prévu du dispositif de commande (2) de l'entraînement de meuble (1) par moteur électrique,
- la télécommande (10) comportant au moins un affichage (17) pour afficher des images enregistrées (28.1...28.n) pour le service, entraînement **caractérisé en ce que**
- la télécommande (10) comporte une installation de détermination (33) pour déterminer la configuration de branchement (3) et
- l'installation de détermination (33) est réalisée de façon que par l'activation elle détermine une configuration de branchement (3) de l'entraînement de meuble par moteur électrique (1),
de façon qu'à l'aide de la configuration de branchement (3) ainsi déterminée, l'unité de configuration (26) adapte la télécommande (10) **en ce qu'**elle génère la libération pour les images (28.1...28.n) correspondant à la configuration de branchement (3) prévue,
les images ainsi libérées (28.1...28.n) étant destinée à être affichées sur l'installation d'affichage (17) et
à l'actionnement de l'élément de service (18, 19, 20, 21) associé à l'une des images (28.1...28.n), un ordre également associé à l'image (28.1...28.n) est transmis par la télécommande (10) à l'entraînement de meubles par moteur électrique (1).

2. Entraînement de meuble par moteur électrique (1) selon la revendication 1,
**caractérisé en ce que**
l'installation de détermination (33), en cas de nouvelle mise en route, après des opérations d'entretien, d'échange ou d'équipement en seconde monte de l'entraînement de meuble par moteur électrique (1), est activée manuellement et/ou automatiquement.

3. Entraînement de meuble par moteur électrique (1) selon la revendication 2,
**caractérisé en ce que**
l'installation de détermination (33) est réalisée pour générer et afficher un menu guide pour permettre à l'utilisateur de déterminer manuellement la configuration de branchement (3) sur l'installation d'affichage (17).

4. Entraînement de meuble par moteur électrique (1) selon la revendication 2 ou 3,
**caractérisé en ce que**
l'installation de détermination (33) est prévue pour lire les données enregistrées dans le dispositif de commande (2) pour déterminer la configuration de branchement (3).

5. Entraînement de meuble par moteur électrique (1) selon l'une des revendications 2 à 4,
**caractérisé en ce que**
l'installation de détermination (33) est réalisée pour commander automatiquement tous les utilisateurs branchés.

6. Entraînement de meuble par moteur électrique (1) selon l'une des revendications précédentes,
**caractérisé en ce que**
la télécommande (10) comporte en outre une installation de mémoire (27) contenant l'enregistrement de toutes les images (28.1...28.n) qui appartiennent aux configurations de branchement possible (3) de l'entraînement de meuble par moteur électrique (1).

7. Entraînement de meuble par moteur électrique (1) selon la revendication 6,
**caractérisé en ce que**
la télécommande (10) comporte en outre une unité de configuration (26) réalisée pour libérer pour l'affichage sur l'installation d'affichage (17) les images (28.1...28.n) enregistrées dans l'installation de mémoire (27) à l'aide de la configuration de branchement (3) déterminée.

8. Entraînement de meuble par moteur électrique (1) selon la revendication 7,
**caractérisé en ce que**
l'unité de configuration (26) est réalisée pour mémoriser dans un tableau d'attribution, la configuration de branchement (3) déterminée par l'installation de détermination (33).

9. Entraînement de meuble par moteur électrique (1) selon l'une ou plusieurs des revendications précédentes,
**caractérisé en ce que**
le dispositif de commande (2) comporte une installation de saisie (34) qui peut être reliée pour coopérer avec l'installation de détermination (33).

10. Entraînement de meuble par moteur électrique (1) selon la revendication 9,
**caractérisé en ce que**
l'installation de saisie (34) est reliée à une installation de configuration (35) et cette installation de configuration (35) est située dans le dispositif de commande (2) et mémorise les informations concernant la configuration de branchement (3).

11. Entraînement de meuble par moteur électrique (1) selon la revendication 9 oui 10,
**caractérisé en ce que**
l'installation de saisie (34) est couplée à une ligne d'alimentation de l'installation d'alimentation en énergie (8) et permet de saisir les valeurs de courant de cette alimentation.

12. Procédé de commande d'un entraînement de meuble par moteur électrique (1) à l'aide d'une télécommande (10),
procédé **caractérisé en ce qu'**
on active une installation de détermination (33) de la télécommande (10) qui détermine la configuration de branchement de l'entraînement de meuble par moteur électrique,
- la configuration de branchement (3) indiquant la nature de consommateur auquel est relié le branchement prédéfini du dispositif de commande (2) de l'entraînement de meuble par moteur électrique (1), de façon qu'à l'aide de la configuration de branchement (3) ainsi déterminée, une unité de configuration (26) adapte la télécommande (10) en générant la libération d'images (28.1... 28.n) correspondant à la configuration de branchement existante (3),
- les images libérées (28.1...28.n) étant libérées pour être affichées sur l'installation d'affichage (17) et
- à l'actionnement de l'un des éléments (18, 19, 20, 21) associés aux images (28.1...28.n), un ordre de commande associé également à l'image (28.1...28.n) est transmis par la télécommande à l'entraînement de meuble par moteur électrique (1).

13. Procédé selon la revendication 12,
selon lequel pour déterminer la configuration de branchement (3), on affiche un menu guide sur l'installation d'affichage (17) de la télécommande (10) avec lequel en actionnant les éléments de manoeuvre (18, 19, 20, 21) de la télécommande (10) on introduit la configuration de branchement (3).

14. Procédé selon la revendication 12,
**caractérisé en ce que**
pour déterminer la configuration de branchement (3), l'installation de détermination (33) lit automatiquement une installation de mémoire de configuration (35) d'un dispositif de commande (2) de l'entraînement de meuble à moteur électrique (1) qui contient l'enregistrement de la configuration de branchement (3).

15. Procédé selon la revendication 12,
selon lequel pour déterminer la configuration de branchement (3), l'installation de détermination (33) commande tous les consommateurs de l'entraînement de meuble par moteur électrique (1), c'est-à-dire qu'elle les met en marche et les coupe et en même temps l'installation de saisie (34) saisit un passage de courant pour saisir le courant correspondant à un consommateur et le consommateur ainsi commandé sera considéré en fonction du passage de courant saisi comme appartenant à la configuration de branchement (3).

16. Procédé selon l'une des revendications 12 à 15,
**caractérisé en ce que**
l'installation de détermination (33) pour déterminer la configuration de branchement (3) lors d'une nouvelle mise en route après un entretien, un échange ou un équipement en seconde monte ou après l'installation d'un programme ou après le démarrage d'un programme sur la télécommande (10), est activé automatiquement ou par l'actionnement d'un ou plusieurs éléments de manoeuvre (18, 19, 20, 21) de la télécommande (10) ou par un autre endroit qui sont prévus seuls ou en combinaison.
